# EUROPÄISCHE PATENTANMELDUNG

(11) **EP 3 660 066 A1**
(43) Veröffentlichungstag der Anmeldung: **03.06.2020**
(21) Anmeldenummer: 18208988.8
(22) Anmeldetag: 28.11.2018
(51) Int. Cl.: C08G 18/62, C08G 18/72, C08G 18/73, C08G 18/75, C08G 18/79, C08G 18/02, C09D 175/04

(54) **POLYISOCYANATZUSAMMENSETZUNG AUF BASIS VON PENTAMETHYLENDIISOCYANAT FÜR BESCHICHTUNGEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft eine Polyisocyanatzusammensetzung, umfassend eine Mischung aus ≥ 60 Gew.-%, bezogen auf das Gesamtgewicht der Mischung, mindestens eines Polyisocyanats auf Basis von Pentamethylendiisocyanat und ≤ 40 Gew.-%, bezogen auf das Gesamtgewicht der Mischung, mindestens eines Polyisocyanats auf Basis eines cycloaliphatischen Diisocyanats und/oder mindestens eines Polyisocyanats auf Basis von Pentamethylendiisocyanat und wenigstens einem cycloaliphatischen Diisocyanat.

## Beschreibung

Die Erfindung betrifft eine Polyisocyanatzusammensetzung auf Basis von Pentamethylendiisocyanat. Weiterhin betrifft die Erfindung ein Verfahren zur Herstellung der erfindungsgemäßen Polyisocyanatzusammensetzung und die Verwendung der erfindungsgemäßen Polyisocyanatzusammensetzung als Vernetzungsmittel in einer Beschichtungszusammensetzung. Außerdem betrifft die Erfindung die Verwendung von Pentamethylendiisocyanat zur Erhöhung der Chemikalienbeständigkeit der erhaltenen Beschichtung. Auch betrifft die Erfindung ein Zwei-Komponenten-System umfassend die erfindungsgemäße Polyisocyanatzusammensetzung, aus dem Zwei-Komponenten-System hergestellte Beschichtungen sowie die damit beschichteten Substrate.

Bei Beschichtungen, insbesondere im Bereich der Automobilindustrie, sind sowohl Kratzfestigkeit als auch Chemikalienbeständigkeit der Beschichtungen wichtige Eigenschaften. Als anerkannte Methoden in Europa haben sich zur Prüfung der Kratzfestigkeit die Laborwaschstraße Amtec Kistler und zur Chemikalienbeständigkeit die Gradientenofenmethode etabliert. Um die Beständigkeit von Klarlacken gegenüber einer Waschanlage zu simulieren, wird von der Firma Amtec Kistler GmbH eine Laborwaschanlage verwendet. Diese Laborwaschanlage orientiert sich in ihren Verhältnissen (Wassermenge, Rotationsgeschwindigkeit der Bürsten, Bürstenmaterial, Relativbewegungen) an einer Originalwaschanlage. Bei der Chemikalienbeständigkeit mit der Gradientenofenmethode wird die Beständigkeit der Lackschicht gegen Baumharz, Pankreatin (Simulation von Vogelexkrementen), deionisiertes Wasser, verdünnte Natronlauge und verdünnte Schwefelsäure bei verschiedenen Temperaturen und einer Einwirkzeit von 30 min. geprüft.

Polyurethan-Beschichtungen sind seit langem bekannt. Für hochwertige lichtechte Decklacke kommen dabei besonders Beschichtungen aus aliphatischen Polyisocyanaten und Polyolen wie beispielsweise Polyacrylatpolyolen, Polyesterpolyolen oder Polycarbonatpolyolen zum Einsatz. Als Polyisocyanate kommen für diese hochwertigen Beschichtungen besonders monomerenarme Derivate hergestellt aus Hexamethylendiisocyanat (HDI) zum Einsatz. Besonders geeignet für elastische hochbeständige Beschichtungen sind dafür Isocyanurat-Polyisocyanate des HDI oder Iminooxadiazindion- und Isocyanurat-Strukturen aufweisende Polyisocyanate des HDI, wie sie z. B. in H. J. Laas, R. Halpaap, J. Pedain, J. prakt. Chem. 1994, 336, 185-200 oder in EP 0 330 966 B1 oder EP 0 798 299 B1 beschrieben sind. Diese Polyisocyanate haben in der Regel Isocyanatfunktionalitäten (F_{NCO}) von 3 oder mehr, wobei man unter Isocyanatfunktionalität die mittlere Zahl an NCO-Gruppen pro Molekül versteht.

Neben dem HDI ist auch 1,5-Pentamethylendiisocyanat (PDI) als Monomer bereits lange bekannt, wie beispielsweise von W. Siefken, Liebigs Ann. Chem. 1949, 562, Seite 122 oder in der DE 1493360 B1 und der DE 1900514 A1 beschrieben.

Die EP 0 693 512 A1 beschreibt die Verwendung spezieller Gemische aus HDI basierten Polyisocyanaten welche durch einen Anteil an Uretdionstrukturen und cycloaliphatischen Isocyanurat-polyisocyanaten, eine verbesserte Elastizität und der Reißfestigkeit gegenüber alleinig von HDI-Polyisocyanat vernetzten Lacken aufweisen. Es wird jedoch nicht offenbart, wie die Chemikalienbeständigkeit dieser Lacke gegenüber Umwelteinflüssen ist.

In DE 197 52 691 wird die Verwendung eines Polyisocyanatgemisches auf Basis von 2-Methyl-1,5-pentandiisocyanat in Kombination mit Isophorondiisocyanat (IPDI) offenbart. Jedoch ist 2-Methyl-1,5-pentandiisocyanat nicht in kommerziell relevanter Menge verfügbar und somit kein praxistauglicher Ersatz für HDI-Polyisocyanate.

Die WO 96/40828 A1 offenbart nicht-wässrige Dispersionen, insbesondere geeignet für die Verwendung als "enamel" Automobilbeschichtungen, mit der Aufgabe den Anteil an flüchtigen organischen Verbindungen zu reduzieren. Es werden Polyisocyanate als Vernetzer für Alkydharze beschrieben, wobei in den Beispielen nur reines IPDI-Isocyanurat zum Einsatz kommt und keine Vergleiche mit anderen Isocyanaten möglich sind. Nachteilig an reinen IPDI-Isocyanuraten ist jedoch dass die Beschichtung eine zu geringe Flexibilität aufweist.

Es war somit weiterhin wünschenswert Polyisocyanate bereitzustellen, aus denen sich flexible Beschichtungen erhalten lassen, die eine verbesserte Chemikalienbeständigkeit gegenüber Natronlauge und/oder Pankreatin, bei gleichbleibender Kratzbeständigkeit gegenüber den bekannten Beschichtungen auf Basis von HDI oder 2-Methyl-1,5-pentandiisocyanat aufweisen.

Aufgabe der vorliegenden Erfindung war es daher eine Polyisocyanatzusammensetzung bereitzustellen, aus der sich flexible Beschichtungen erhalten lassen, die im Vergleich zu den im Stand der Technik bekannten Systemen auf Basis von HDI oder 2-Methyl-1,5-pentandiisocyanat bei gleichbleibender Kratzbeständigkeit eine höhere Chemikalienbeständigkeit gegenüber Natronlauge und/oder Pankreatin aufweisen.

Diese Aufgabe wurde erfindungsgemäß gelöst, durch eine Polyisocyanatzusammensetzung, umfassend eine Mischung aus ≥ 60 Gew.-%, bezogen auf das Gesamtgewicht der Mischung, mindestens eines Polyisocyanats auf Basis von Pentamethylendiisocyanat und ≤ 40 Gew.-%, bezogen auf das Gesamtgewicht der Mischung, mindestens eines Polyisocyanats auf Basis eines cycloaliphatischen Diisocyanats und/oder mindestens eines Polyisocyanats auf Basis von Pentamethylendiisocyanat und wenigstens einem cycloaliphatischen Diisocyanat.

Vorteilhafterweise konnte durch den Einsatz von Pentamethylendiisocyanat in der Polyisocyanatzusammensetzung der Anteil an cycloaliphatischen Diisocyanaten reduziert werden ohne dass sich die Kratzbeständigkeit verschlechtert. So lässt sich eine verbesserte Chemikalienbeständigkeit erreichen und die Flexibilität bleibt erhalten.

Erfindungsgemäß bedeuten die Bezugnahmen auf "umfassend", "enthaltend" usw. bevorzugt "im Wesentlichen bestehend aus" und ganz besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt.

In einer ersten bevorzugten Ausführungsform ist enthält die Mischung ≥ 70 Gew.-%, bevorzugt ≥ 75 Gew.-% und besonders bevorzugt ≥ 80 Gew.-%, bezogen auf das Gesamtgewicht der Mischung, des mindestens einen Polyisocyanats auf Basis von Pentamethylendiisocyanat und die jeweils zu 100 Gew.-% fehlenden Anteile bestehen aus dem mindestens einem Polyisocyanats auf Basis eines cycloaliphatischen Diisocyanats und/oder dem mindestens eines Polyisocyanats auf Basis von Pentamethylendiisocyanat und wenigstens einem cycloaliphatischen Diisocyanat und bestehen bevorzugt aus dem mindestens einen Polyisocyanat auf Basis eines cycloaliphatischen Diisocyanats. Hieraus ergibt sich unter anderem der Vorteil, dass die Chemikalienbeständigkeit weiter verbessert wird ohne die notwendige Erhaltung der Flexibilität des Systems zu senken.

Die Polyisocyanate auf Basis von Pentamethylendiisocyanat sind beliebige durch Modifizierung von Pentamethylendiisocyanat (PDI) erhältliche oligomere Polyisocyanate mit Uretdion-, Isocyanurat-, Allophanat-, Biuret-, Iminooxadiazindion- und/oder Oxadiazintrionstruktur oder beliebige Gemische solcher Polyisocyanate. Die Herstellung dieser Polyisocyanate erfolgt nach an sich bekannten Methoden zur Isocyanatoligomerisierung, wie sie beispielsweise in J. Prakt. Chem. 336 (1994) 185 - 200 oder EP 0 798 299 A1 beschrieben sind, durch Umsetzung eines Teils der Isocyanatgruppen des PDI unter Bildung von Polyisocyanatmolekülen, die aus mindestens zwei Diisocyanatmolekülen bestehen, und einer sich in der Regel anschließenden destillativen oder extraktiven Abtrennung des nicht umgesetzten monomeren PDI.

Der Gehalt an Isocyanurattrimer lässt sich durch entsprechende Reaktionsführung einstellen, so wird die Trimerisierungsreaktion vorzugsweise nach Erreichen des gewünschten Gehalts an Isocyanurattrimer abgebrochen. Dies kann beispielsweise durch Abkühlen des Reaktionsgemisches auf Raumtemperatur erfolgen. Im Allgemeinen wird die Umsetzung aber durch Zugabe eines oder mehrerer dem Fachmann bekannter Katalysatorgifte und gegebenenfalls nachfolgendes kurzzeitiges Erhitzen der Reaktionsmischung beispielsweise auf eine oberhalb 80 °C liegende Temperatur beendet.

Vorliegend wird unter "Polyisocyanat auf Basis von Pentamethylendiisocyanat" verstanden, dass Pentamethylendiisocyanat ≥ 50 Gew.-%, bevorzugt ≥ 70 Gew.-%, besonders bevorzugt ≥ 90 Gew.-% und ganz besonders bevorzugt 100 Gew.-% der insgesamt für das Polyisocyanat eingesetzten monomeren Diisocyanate ausmachen. Hieraus ergibt sich der weitere Vorteil, dass die Chemikalienbeständigkeit der erhaltenen Beschichtungen weiter verbessert wird.

Der sich zu 100 Gew.-% ergänzende Anteil kann aus beliebigen von Pentamethylendiisocyanat verschiedenen aliphatischen, araliphatischen und/oder aromatischen Diisocyanaten bestehen, wobei hierfür geeignete monomere Diisocyanate insbesondere solche des Molekulargewichtsbereichs 140 bis 400 sind, wie beispielsweise 1,4-Diisocyanatobutan, 1,6-Hexamethylendiisocyanat, 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 2,4- und 2,6-Diisocyanato-1-methylcyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 2,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis(isocyanatomethyl)benzol (XDI) oder beliebige Gemische solcher Diisocyanate.

Das zur Herstellung der auf Pentamethylendiisocyanat basierenden Polyisocyanate eingesetzte PDI ist auf verschiedene Weise, beispielsweise durch Phosgenierung in der Flüssig- oder Gasphase oder auf phosgenfreien Weg, wie z. B. durch thermische Urethanspaltung, ausgehend von vorzugsweise biotechnologisch durch Decarboxylierung der natürlich vorkommenden Aminosäure Lysin erhaltenem Pentamethylendiamin (PDA) zugänglich. Besonders bevorzugt ist die Herstellung von PDI aus PDA durch Phosgenierung in der Gasphase. Die vorstehend genannten weiteren Diisocyanate können nach verschiedenen bekannten Methoden, beispielsweise durch Phosgenierung in der Flüssig- oder Gasphase oder auch auf phosgenfreien Weg, wie z. B. durch thermische Urethanspaltung, erhalten werden.

Die Polyisocyanate auf Basis eines cycloaliphatischen Polyisocyanats sind beliebige durch Modifizierung von geeigneten monomeren cycloaliphatischen Diisocyanaten erhältliche oligomere Polyisocyanate mit Uretdion-, Isocyanurat-, Allophanat-, Biuret-, Iminooxadiazindion- und/oder Oxadiazintrionstruktur oder beliebige Gemische solcher Polyisocyanate. Die Herstellung dieser Polyisocyanate erfolgt nach an sich bekannten Methoden zur Isocyanatoligomerisierung, wie sie beispielsweise in J. Prakt. Chem. 336 (1994) 185 - 200 beispielhaft beschrieben sind, durch Umsetzung eines Teils der Isocyanatgruppen der monomeren Diisocyanate unter Bildung von Polyisocyanatmolekülen, die aus mindestens zwei Diisocyanatmolekülen bestehen, und einer sich in der Regel anschließenden destillativen oder extraktiven Abtrennung der nicht umgesetzten monomeren Diisocyanate. Die Herstellung von Polyisocyanaten aus verschiedenen monomeren Diisocyanaten kann nach bekannten Methoden, wie beispielsweise aus der EP 47452 A1 bekannt.

Gemäß einer weiteren bevorzugten Ausführungsform enthält die Mischung der Polyisocyantzusammensetzung ≥ 2 Gew.-%, bevorzugt ≥ 5 Gew.-%, besonders bevorzugt ≥ 10 Gew.-% und ganz besonders bevorzugt ≥ 20 Gew.-%, bezogen auf das Gesamtgewicht der Mischung, des mindestens einen Polyisocyanats auf Basis eines cycloaliphatischen Diisocyanats und/oder des mindestens einen Polyisocyanats auf Basis von Pentamethylendiisocyanat und wenigstens einem cycloaliphatischen Diisocyanat, bevorzugt des mindestens einen Polyisocyanats auf Basis eines cycloaliphatischen Diisocyanats.

Gemäß einer weiteren bevorzugten Ausführungsform wird unter "auf Basis von Pentamethylendiisocyanat und wenigstens einem cycloaliphatischen Diisocyanat" verstanden, dass das wenigstens eine cycloaliphatischen Diisocyanat ≥ 50 Gew.-%, bevorzugt ≥ 60 Gew.-%, besonders bevorzugt ≥ 70 Gew.-% der insgesamt eingesetzten monomeren Diisocyanate ausmacht. Hieraus ergibt sich der weitere Vorteil, dass sich so die Beständigkeit gegenüber mechanischer Beanspruchung weiter verbessert wird.

Der sich zu 100 Gew.-% ergänzende Anteil kann neben Pentamethylendiisocyanat aus beliebigen von Pentamethylendiisocyanat verschiedenen, vorstehend aufgelisteten cycloaliphatischen Diisocyanaten bestehen.

Vorliegend wird unter "auf Basis eines cycloaliphatischen Diisocyanats" verstanden, dass ≥ 50 Gew.-%, bevorzugt ≥ 70 Gew.-%, besonders bevorzugt ≥ 90 Gew.-% und ganz besonders bevorzugt 100 Gew.-% der insgesamt eingesetzten cycloaliphatischen monomeren Diisocyanate aus einem bestimmten, cycloaliphatischen monomeren Diisocyanat bestehen.

Der sich zu 100 Gew.-% ergänzende Anteil kann aus beliebigen von diesem cycloaliphatischen Diisocyanat verschiedenen cycloaliphatischen Diisocyanaten bestehen, wobei hierfür geeignete monomere Diisocyanate insbesondere solche des Molekulargewichtsbereichs 140 bis 400 sind, wie beispielsweise 1,3- und 1,4-Diisocyanatocyclohexan, 2,4- und 2,6-Diisocyanato-1-methylcyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 2,4'-Diisocyanatodicyclohexylmethan, 1-Isocyanato-1-methyl-4(3)isocyanato-methylcyclohexan, Bis(isocyanatomethyl)-bicyclo[2.2.1]heptane, 2,5-Diisocyanato-1,4:3,6-dianhydro-2,5-dideoxy-L-iditol, 2,5-Bis(isocyanatomethyl)-1,4:3,6-dianhydro-2,5-dideoxy-L-iditol, 2,5-Bis(isocyanatomethyl)tetrahydrofuran, Bis-(isocyanatomethyl)-norbornan, oder beliebige Gemische solcher Diisocyanate. Erhältlich sind die genannten Diisocyanate wie vorstehend bereits beispielsweise beschrieben.

Im Rahmen der vorliegenden Erfindung ist es jedoch besonders bevorzugt, wenn das cycloaliphatische Diisocyanat aus der Gruppe bestehend aus 1,3- und 1,4-Diisocyanatocyclohexan, 2,4- und 2,6-Diisocyanato-1-methylcyclohexan, 1,3- und 1,4-Bis-(isocyanatomethyl)-cyclohexan, 1-Isocyanato-3,3,5-trimethyl-5-isocyanatomethylcyclohexan, 4,4'-Diisocyanato-dicyclohexylmethan, 2,4'-Diisocyanatodicyclohexylmethan, 1-Isocyanato-1-methyl-4(3)isocyanato-methylcyclohexan und Bis-(isocyanatomethyl)-norbornan ausgewählt wird und bevorzugt 1-Isocyanato-3,3,5-trimethyl-5-isocyanatomethylcyclohexan ist.

Gemäß einer weiteren bevorzugten Ausführungsform besteht die erfindungsgemäße Polyisocyanatzusammensetzung zu ≥ 70 Gew.-%, bevorzugt ≥ 85 Gew.-%, besonders bevorzugt ≥ 95 Gew.-% und ganz besonders bevorzugt zu 100 Gew.-% aus der Mischung.

Bei allen Ausführungsformen ist es generell besonders bevorzugt, wenn der Restmonomerengehalt an monomeren Diisocyanaten in der erfindungsgemäßen Polyisocyanatzusammensetzung unter 0,5 Gew.-%, bevorzugt unter 0,3 Gew.-%, bezogen auf das Gesamtgewicht der Polyisocyantzusammensetzung, liegt. Die Bestimmung der Restmonomergehalte kann beispielsweise gaschromatographisch nach der DIN EN ISO 10283:2007 (Bindemittel für Beschichtungsstoffe - Bestimmung von monomeren Diisocyanaten in Isocyanatharzen) erfolgen.

Generell kann die erfindungsgemäße Polyisocyanatzusammensetzung lösemittelfrei vorliegen, es können aber auch ein oder mehrere gegenüber den reaktiven Gruppen der eingesetzten Komponenten inerte Lösungsmittel enthalten sein.

Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso®, Isopar®, Nappar®, Varsol® (ExxonMobil Chemical Central Europe, Köln, DE) und Shellsol® (Shell Deutschland Oil GmbH, Hamburg, DE) im Handel sind, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

Durch Wahl der Menge an Lösungsmittel, kann der Festkörpergehalt der erfindungsgemäßen Polyisocyanatzusammensetzung bei der bevorzugten Mitverwendung organischer Lösungsmittel in weiten Grenzen variiert werden. Hierbei ist es ganz besonders bevorzugt, wenn die erfindungsgemäße Polyisocyanatzusammensetzung einen Festkörpergehalt von ≥ 10 und ≤ 95 Gew.-%, bevorzugt von ≥ 25 und ≤ 85 Gew.-%, aufweist.

Verfahren zur Herstellung einer erfindungsgemäßen Polyisocyanatzusammensetzung, wobei das mindestens eine Polyisocyanat auf Basis von Pentamethylendiisocyanat mit dem mindestens einen Polyisocyanat auf Basis eines cycloaliphatischen Diisocyanats und/oder mindestens einen Polyisocyanat auf Basis von Pentamethylendiisocyanat und wenigstens einem cycloaliphatischen Diisocyanat vermischt wird und vorher, gleichzeitig und/oder nachher ein oder mehrere Hilfs- und Zusatzstoffe zugegeben werden können.

Verwendung einer Polyisocyanatzusammensetzung gemäß einem der Ansprüche 1 bis 5 als Vernetzungsmittel in einer Beschichtungszusammensetzung.

Verwendung von Pentamethylendiisocyanat in einer Polyisocyanatzusammensetzung gemäß einem der Ansprüche 1 bis 5 zur Erhöhung der Chemikalienbeständigkeit der erhaltenen Beschichtung.

Die erfindungsgemäße Polyisocyanatzusammensetzung ist sehr gut zur Herstellung eines Zwei-Komponenten-Systems geeignet, somit ist ein Zwei-Komponenten-System enthaltend eine Komponente A) umfassend mindestens eine erfindungsgemäße Polyisocyanatzusammensetzung und eine Komponente B), umfassend wenigstens ein gegenüber Isocyanatgruppen reaktives Bindemittel, wobei die Komponente A) und/oder die Komponente B) wenigstens ein Verlaufshilfsmittel und/oder weitere Hilfs- und Zusatzstoffe enthalten kann ein weiterer Gegenstand der Erfindung.

Das erfindungsgemäße Zwei-Komponenten-System lässt sich beispielsweise durch Vermischen der erfindungsgemäßen Polyisocyanatzusammensetzung mit den anderen Verbindungen erhalten.

Als gegenüber Isocyanatgruppen reaktives Bindemittel in der Komponente B) können alle dem Fachmann bekannten Verbindungen - auch in beliebigen Mischungen untereinander - eingesetzt werden, welche eine mittlere OH-, NH- bzw. SH-Funktionalität von mindestens 1,5 aufweisen. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit) sein, kurzkettige Polyamine aber auch Polyasparaginsäureester, Polythiole und/oder Polyhydroxyverbindungen wie Polyetherpolyole, Polyesterpolyole, Polyurethanpolyole, Polysiloxanpolyole, Polycarbonatpolyole, Polyetherpolyamine, Polybutadienpolyole, Polyacrylatpolyole und/oder Polymethacrylatpolyole sowie deren Mischpolymerisate, im folgenden Polyacrylatpolyole genannt.

Gemäß einer weiteren bevorzugten Ausführungsform ist das gegenüber Isocyanatgruppen reaktive Bindemittel eine Polyhydroxyverbindung, bevorzugt ein Polyetherpolyol, Polyesterpolyol, Polycarbonatpolyol oder Polyacrylatpolyol.

Bei den gegebenenfalls enthaltenen Hilfs- und Zusatzstoffen kann es sich beispielsweise um, dem Fachmann bekannte, Cobindemittel, Trocknungsmittel, Füllstoffe, Colöser, Farb- oder EffektPigmente, Verdicker, Mattierungsmittel, Lichtschutzmittel, Lackadditive, wie Dispergiermittel, Verdicker, Entschäumer und andere Hilfsmittel, wie Haftmittel, Fungizide, Bakterizide, Stabilisatoren oder Inhibitoren und Katalysatoren oder Emulgatoren handeln.

Ein weiterer Gegenstand der Erfindung ist ein Verfahren zur Herstellung einer Beschichtung auf einem Substrat, bei dem ein erfindungsgemäßes Zwei-Komponenten-System auf das Substrat aufgebracht und bei einer Temperatur > 25°C und < 150°C, bevorzugt > 35°C und < 140°C, besonders bevorzugt > 50°C und < 130°C ausgehärtet wird.

Die Applikation des erfindungsgemäßen Zwei-Komponenten-Systems kann nach bekannten Methoden, beispielsweise durch Spritzen, Streichen, Fluten oder mit Hilfe von Walzen oder Rakeln auf beliebige Substrate erfolgen.

Als Substrate eignen sich beispielsweise Metall, Glas, Stein, keramische Materialien, Beton, Kunststoffe, Composite, Textilien, Leder oder Papier, die vor der Beschichtung gegebenenfalls auch mit üblichen Grundierungen versehen werden können. Besonders bevorzugte Substrate sind Substrate, die eine Oberfläche aus Metall und/oder Kunststoff aufweisen.

Neben dem vorstehend beschriebenen bevorzugten Einsatz in unblockierter Form kann die erfindungsgemäße Polyisocyanatzusammensetzung aber auch mit den, aus der Polyurethanchemie bekannten Blockierungsmitteln blockiert, im Sinne von Ein-Komponenten-Systemen, eingesetzt werden. Als Blockierungsmittel können hierbei allgemein die in H.-U. Meier-Westhues, Polyurethane - Lacke, Kleb- und Dichtstoffe, Hannover Vincentz Network 2007 auf den Seiten 36-43 oder beispielsweise in der EP 713871 A1 beschriebenen Verbindungen eingesetzt werden.

Mit Hilfe des erfindungsgemäßen Verfahrens lassen sich Beschichtungen erhalten, die eine verbesserte Chemikalienbeständigkeit, insbesondere gegenüber Natronlauge oder Pankreatin im Vergleich zu Beschichtungen auf Basis von HDI oder 2-Methyl-1,5-pentandiisocyanat aufweisen.

Daher ist eine Beschichtung, hergestellt oder herstellbar nach dem erfindungsgemäßen Verfahren ein weiterer Gegenstand der Erfindung.

Neben der Beschichtung selbst ist ein Verbund aus der erfindungsgemäßen Beschichtung und einem Substrat mit einer Oberfläche aus Metall und/oder Kunststoff ein weiterer Gegenstand der Erfindung.

Die vorliegende Erfindung wird im Folgenden anhand von Beispielen und Vergleichsbeispielen näher erläutert, ohne sie jedoch auf diese einzuschränken.

### Beispiele:

Alle Prozentangaben beziehen sich, soweit nichts Anderslautendes vermerkt, auf das Gewicht. Die Bestimmung der NCO-Gehalte erfolgte titrimetrisch nach DIN EN ISO 11909:2007 (Bindemittel für Beschichtungsstoffe - Isocyanatharze - Allgemeine Prüfverfahren). Sämtliche Viskositätsmessungen erfolgten mit einem Physica MCR 51 Rheometer der Fa. Anton Paar Germany GmbH (DE) nach DIN EN ISO 3219:1994 (Kunststoffe - Polymere/Harze in flüssigen, emulgiertem oder dispergiertem Zustand - Bestimmung der Viskosität mit einem Rotationsviskosimeter bei definiertem Geschwindigkeitsgefälle).

### Polyisocyanat 1 (auf Basis m-PDI)

100 g (0,59 mol) 2-Methyl-1,5-Pentamethylendiisocyanat (m-PDI) wurden in einen Vierhalskolben ausgestattet mit Rührer, Rückflusskühler, N₂-Durchleitungsrohr und Innenthermometer vorgelegt, dreimal bei Raumtemperatur durch Anlegen eines Vakuums von ca. 50 mbar entgast und mit Stickstoff belüftet. Anschließend wurde der Ansatz auf 60°C erwärmt und die Katalysatorlösung (0,5 %ige N,N,N-Trimethyl-N-benzylammoniumhydroxid Lösung in einem 1:1-Gemisch von 2-Ethyl-1-hexanol und 2-Ethyl-1,3-hexandiol) in einer solchen Geschwindigkeit zudosiert, dass sich die Temperatur des Reaktionsgemisches trotz der exotherm einsetzenden Trimerisierungsreaktion auf maximal 74°C erwärmte. Nach Erreichen eines NCO-Gehalts von 40,2 Gew.-% wurde mit Dibutylphosphat (80 mol% bezogen auf eingesetztes Trimethyl-benzylammoniumhydroxid) die Reaktion gestoppt und das nicht umgesetzte monomere PDI bei einer Temperatur von 140°C und einem Druck von 0,5 mbar im Dünnschichtverdampfer abgetrennt. Es wurde ein praktisch farbloses hochviskoses Polyisocyanuratpolyisocyanat erhalten, welches 90%ig in Butylacetat gelöst die folgenden Kenndaten aufwies:

| | |
|---|---|
| NCO-Gehalt: | 18,4% |
| Viskosität (23 °C): | 1800 mPa.s |
| Festkörpergehalt (Butylacetat): | 90% |

### Polyisocyanat 2 (auf Basis PDI)

In einen Vierhalskolben ausgestattet mit Rührer, Rückflusskühler, N₂-Durchleitungsrohr und Innenthermometer wurden 1000 g (6,49 mol) 1,5-Pentamethylendiisocyanat (PDI) vorgelegt und dreimal bei Raumtemperatur entgast und mit Stickstoff belüftet. Anschließend wurde der Ansatz auf 60 °C erwärmt und 9,0 ml der Katalysatorlösung (1,5 %ige N,N,N-Trimethyl-N-benzylammoniumhydroxid Lösung in Methanol und 2-Ethylhexanol) so zudosiert, dass die exotherme Trimerisierung bei einer Temperatur von 60-80 °C gehalten wurde. Bei Erreichen eines NCO-Gehalts von 36,7 Gew.-% wurde die Reaktion mit Dibutylphosphat (equimolare Menge bezogen auf eingesetztes Trimethylbenzylammoniumhydroxid) gestoppt und das überschüssige PDI bei 140 °C und 0,5-0,6 mbar Druck über eine Dünnschichtdestillation abgetrennt. Das erhaltene Harz wies folgende Kennzahlen auf:

| | |
|---|---|
| NCO-Gehalt: | 21,5% |
| Festkörpergehalt: | 100% |

### Polyisocyanat 3 (auf Basis HDI) Desmodur® N 3390 BA

| | |
|---|---|
| NCO-Gehalt: | 19,6% |
| Festkörpergehalt (Butylacetat): | 90% |

### Polyisocyanat 4 (auf Basis IPDI) Desmodur® Z 4470

| | |
|---|---|
| NCO-Gehalt: | 11,9% |
| Festkörpergehalt (Butylacetat): | 70% |

Zur Ermittlung der allgemeinen mechanischen Kenndaten der gehärteten 2K-PUR-Beschichtungen wurden Klarlacke folgender Zusammensetzung auf Substrate entsprechend genannter Eigenschaftsuntersuchungen mittels Sprühapplikation aufgetragen und 30 min. bei 130°C gehärtet.

**Tabelle 1: Zusammensetzung der 2K-PUR-Klarlacke**

| **Formulierung** | | **A (Vgl.)** | **B (Erf.)** | **C (Vgl.)** | **D (Vgl.)** | **E (Vgl.)** | **F (Vgl.)** |
|---|---|---|---|---|---|---|---|
| **Komponente A (Bindemittel)** | Festkörpergehalt | | | | | | |
| Macrynal SM 510n/60XMPAC (OH-Gehalt : 2,7) | 60% | 49,58 | 50,37 | 51,34 | 48,75 | 49,43 | 49,80 |
| Tinuvin 1130, 8 % ig in Xylol | 8% | 2,92 | 2,93 | 2,98 | 2,92 | 2,93 | 2,94 |
| Tinuvin 292, 8 % ig in Xylol | 8% | 2,92 | 2,93 | 2,98 | 2,92 | 2,93 | 2,94 |
| Octa-Soligen Calcium 4, basic - Lff. | 20% (Lff.) | 0,84 | 0,85 | 0,86 | 0,84 | 0,84 | 0,85 |
| Addocat 201 (DBTL) 1 % in BA | 1% | 0,47 | 0,47 | 0,48 | 0,47 | 0,47 | 0,47 |
| 3M Novec Fluortensid FC-4430 mit DPM, 10% ig in BA | 10% | 2,11 | 2,11 | 2,15 | 2,10 | 2,11 | 2,11 |

| **Komponente B (Härter)** | | | | | | | |
|---|---|---|---|---|---|---|---|
| Polyisocyanat 1 in Butylacetat | 90% | 13,25 | | | 9,66 | | |
| Polyisocyanat 2 | 100% | | 11,70 | | | 8,57 | |
| Polyisocyanat 3 in Butylacetat | 90% | | | 13,09 | | | 9,51 |
| Polyisocyanat 4 in Butylacetat | 70% | 7,30 | 7,17 | 7,21 | 12,40 | 12,24 | 12,24 |
| Gewichts Verhältnis der aliphatischen/cycloaliphatischen Poylisocynate(Fes tharze) | | 7:3 | 7:3 | 7:3 | 1:1 | 1:1 | 1:1 |
| Butylacetat / Xylol / DBE (41,4 : 41,0 : 17,6) | | 20,61 | 21,47 | 18,91 | 19,94 | 20,48 | 19,14 |
| **Gesamt** | | **100,0** | **100,0** | **100,0** | **100,0** | **100,0** | **100,0** |
| NCO/OH - Verhältnis | | 1,0 | 1,0 | 1,0 | 1,0 | 1,0 | 1,0 |

| | | | | | | | |
|---|---|---|---|---|---|---|---|
| Vgl. = Vergleichsbeispiel; Erf. = erfindungsgemäßes Beispiel | | | | | | | |

Die zur Prüfung der Beständigkeit der gehärteten Klarlacke gegen simulierte Umwelteinflüsse wurde gemäß der DIN EN ISO 2812-5:2007-05 Bestimmung der Beständigkeit gegen Flüssigkeiten - Teil 5. Verfahren mit dem Gradientenofen (ISO 2812-5:2017) durchgeführt. Die jeweiligen Formulierungen wurden einheitlich auf Gradientenprüfblechen aus Stahl in einem Zweischichtaufbau (Klarlack 40µm ±10µm über schwarzen Basislack 10-15µm (Spies Hecker, Permacron® Basislack 293 RAL 9005 tiefschwarz, welcher 10min. bei 80°C vorgetrocknet wurde)) appliziert und 30min. bei 130°C getrocknet. Die so vorbereiteten Prüfbleche wurden gemäß dem Gradientenofen Verfahren mit den entsprechenden Prüfflüssigkeiten versehen und anschließend eine linearen Temperaturgradienten von 36°-68°C unterzogen. Die so beanspruchten Bleche wurden anschließend mit klarem Wasser abgewaschen und nach 1 und 24 Stunden beurteilt um neben der direkten Schädigung auch evtl. selbstheilende Eigenschaften der Lacke einzuschätzen. Für diese Beurteilung wurden die Bereiche eines ersten erkennbaren Angriffs des Klarlacks herangezogen.

Die Ergebnisse der Untersuchung (Tabelle 2 - Beständigkeit der Klarlacke gegen simulierte Umwelteinflüsse) zeigen, dass das Vergleichsbeispiel der Formulierung C (Polyisocyanat 3 und 4 im Verhältnis 7:3) die schwächste Beständigkeit gegenüber Baumharz und gegenüber Natronlauge aufweist.

Das Vergleichsbeispiele der Formulierung A (Polyisocyanat 1 und 4 im Verhältnis 7:3) eine schwache Laugenbeständigkeit in Kombination mit einer nur mittleren Baumharzbeständigkeit zeigt. Das erfindungsgemäße Beispiel der Formulierung B (Polyisocyanat 2 und 4 im Verhältnis 7:3) zeigt neben einer sehr guten Beständigkeit gegenüber Baumharz auch die beste Beständigkeit gegenüber Natronlauge.

**Tabelle 2: Beständigkeit der Klarlacke gegen simulierte Umwelteinflüsse**

| **Formulierung** | **A** | **B** | **C** | **D** | **E** | **F** |
|---|---|---|---|---|---|---|
| | **Vgl. Bsp.** | **Erf. Bsp.** | **Vgl. Bsp.** | **Vgl. Bsp.** | **Vgl. Bsp.** | **Vgl. Bsp.** |
| **Prüfsubstanzen (Gradientenofen)** | Beurteilung nach 1h / 24h | | | | | |
| **Baumharz** | 54° / 54° | 60° / 60° | 44° / 44° | 56°/56° | 58°/58° | 58°/58° |
| **Pankreatin (1:1 verdünnt in Wasser)** | 36° / 36° | 36° / 36° | 36° / 36° | 36°/ 36° | 36°/ 36° | 36°/ 36° |
| **Deionisiertes Wasser** | >68° / >68° | >68° / >68° | >68° / >68° | >68° / >68° | >68° / >68° | >68° / >68° |
| **Natronlauge (1% ig in Wasser)** | 60° / 60° | 64° / 64° | 58° / 58° | 53° / 53° | 67° / 67° | 67° / 67° |
| **Schwefelsäure (1% ig in Wasser)** | 50° / 50° | 51° / 51° | 50° / 50° | 50° / 50° | 51° / 51° | 52° / 52° |

Erhöht man den Anteil an cycloaliphatischen Polyisocyanat in den Formulierungen auf ein Verhältnis 1:1, so sind zeigen die Formulierungen D, E und F ein fast ähnliches Niveau in Bezug auf die Baumharzbeständigkeit jedoch fällt das Vergleichsbeispiel Formulierung D (Polyisocyanat 1 und 4 im Verhältnis 1:1) in der Natronlauge Beständigkeit ab, was nicht angestrebt wird.

Gemäß der Aufgabenstellung ist neben einer guten Beständigkeit gegenüber Umwelteinflüssen auch eine kratzbeständige Beschichtung gewünscht, da Kratzer den Glanz der Oberfläche enorm (ähnlich der Umwelteinflüsse) beeinträchtigen.

Für die Prüfung der Beständigkeit gegen nassmechanische Beanspruchung wurden Coil Coating Prüftafeln, Schwarz (CS-300570), (Fa. Zanders PBL, Solingen, Deutschland) mit 40 µm ±10 µm Klarlack spritzbeschichtet und in der Amtec-Kistler Laborwaschanlage einer Nassverkratzung Zyklus (10 Bewegungen) ausgesetzt.

**Tabelle 3: Beständigkeit der Klarlacke gegenüber nasschemischer Beanspruchung**

| **Formulierung** | | **A** | **B** | **C** | **D** | **E** | **F** |
|---|---|---|---|---|---|---|---|
| | | **Vgl. Bsp.** | **Erf. Bsp.** | **Vgl. Bsp.** | **Vgl. Bsp.** | **Vgl. Bsp.** | **Vgl. Bsp.** |
| **Glanz 20°** | **Ausgangsglanz** | 88 | 88 | 88 | 88 | 87 | 88 |
| | **Restglanz** | 31 | 42 | 43 | 29 | 36 | 36 |
| **Relativer Restglanz** | | 35% | 48% | 49% | 33% | 41% | 41% |
| **Glanz 20°** | **Selbstheilung nach 2h 60°C** | 33 | 44 | 44 | 29 | 37 | 37 |
| **Relativer Restglanz** | | 38% | 50% | 50% | 33% | 43% | 43% |

Um die Kratzfestigkeit und die Selbstheilungseigenschaften des Klarlacks zu bewerten, wurde der Glanz gemessen - vor dem Verkratzen (Ausgangsglanz), nach dem Verkratzen und nach Selbstheilung bei 60°C über einen Zeitraum von zwei Stunden. Wie aus der Tabelle 3 ersichtlich zeigen die Formulierung A und D (Polyisocyanat 1 und 4) die geringste Beständigkeit gegenüber nassmechanischer Beanspruchung. Die Formulierungen B, E (Polyisocyanate 2 und 4) und die Formulierung C, F (Polyisocyanat 3 und 4) ein höheres Niveau in der Beständigkeit gegenüber Nassverkratzung.

Somit ist das erstrebenswerte Optimum der Beständigkeit gegenüber simulierten Umwelteinflüssen und mechanischer Beanspruchung überraschenderweise mit der Kombination aus Polyisocyanat 2 und 4 erreicht worden.

## Patentansprüche

1. Polyisocyanatzusammensetzung, umfassend eine Mischung aus ≥ 60 Gew.-%, bezogen auf das Gesamtgewicht der Mischung, mindestens eines Polyisocyanats auf Basis von Pentamethylendiisocyanat und ≤ 40 Gew.-%, bezogen auf das Gesamtgewicht der Mischung, mindestens eines Polyisocyanats auf Basis eines cycloaliphatischen Diisocyanats und/oder mindestens eines Polyisocyanats auf Basis von Pentamethylendiisocyanat und wenigstens einem cycloaliphatischen Diisocyanat.

2. Polyisocyanatzusammensetzung gemäß Anspruch 1, **dadurch gekennzeichnet, dass** die Mischung ≥ 70 Gew.-%, bevorzugt ≥ 75 Gew.-% und besonders bevorzugt ≥ 80 Gew.-%, bezogen auf das Gesamtgewicht der Mischung, des mindestens einen Polyisocyanats auf Basis von Pentamethylendiisocyanat enthält und die jeweils zu 100 Gew.-% fehlenden Anteile aus dem mindestens einem Polyisocyanats auf Basis eines cycloaliphatischen Diisocyanats und/oder dem mindestens eines Polyisocyanats auf Basis von Pentamethylendiisocyanat und wenigstens einem cycloaliphatischen Diisocyanat bestehen und bevorzugt aus dem mindestens einen Polyisocyanat auf Basis eines cycloaliphatischen Diisocyanats besteht.

3. Polyisocyantzusammensetzung gemäß Anspruch 1 oder 2, **dadurch gekennzeichnet, dass** die Mischung ≥ 2 Gew.-%, bevorzugt ≥ 5 Gew.-%, besonders bevorzugt ≥ 10 Gew.-% und ganz besonders bevorzugt ≥ 20 Gew.-%, bezogen auf das Gesamtgewicht der Mischung, des mindestens einen Polyisocyanats auf Basis eines cycloaliphatischen Diisocyanats und/oder des mindestens einen Polyisocyanats auf Basis von Pentamethylendiisocyanat und wenigstens einem cycloaliphatischen Diisocyanat enthält, bevorzugt des mindestens einen Polyisocyanats auf Basis eines cycloaliphatischen Diisocyanats.

4. Polyisocyanatzusammensetzung gemäß einem der Ansprüche 1 bis 3, **dadurch gekennzeichnet, dass** das Polyisocyanat auf Basis von Pentamethylendiisocyanat und wenigstens einem cycloaliphatischen Diisocyanat zu ≥ 50 Gew.-%, bevorzugt ≥ 60 Gew.-% und besonders bevorzugt ≥ 70 Gew.-% aus wenigstens einem cycloaliphatischen Diisocyanat aufgebaut ist.

5. Polyisocyanatzusammensetzung gemäß einem der Ansprüche 1 bis 4, **dadurch gekennzeichnet, dass** das cycloaliphatische Diisocyanat ausgewählt wird aus der Gruppe bestehend aus 1,3- und 1,4-Diisocyanatocyclohexan, 2,4- und 2,6-Diisocyanato-1-methylcyclohexan, 1,3- und 1,4-Bis-(isocyanatomethyl)-cyclohexan, 1-Isocyanato-3,3,5-trimethyl-5-isocyanatomethylcyclohexan, 4,4'-Diisocyanato-dicyclohexylmethan, 2,4'-Diisocyanatodicyclohexylmethan, 1-Isocyanato-1-methyl-4(3)isocyanatomethylcyclohexan oder Bis-(isocyanatomethyl)-norbornan und bevorzugt 1-Isocyanato-3,3,5-trimethyl-5-isocyanatomethylcyclohexan ist.

6. Polyisocyanatzusammensetzung gemäß einem der Ansprüche 1 bis 5, **dadurch gekennzeichnet, dass** die Polyisocyanatzusammensetzung zu ≥ 70 Gew.-%, bevorzugt ≥ 85 Gew.-%, besonders bevorzugt ≥ 95 Gew.-% und ganz besonders bevorzugt zu 100 Gew.-% aus der Mischung besteht.

7. Verfahren zur Herstellung einer Polyisocyanatzusammensetzung gemäß einem der Ansprüche 1 bis 6, wobei das mindestens eine Polyisocyanat auf Basis von Pentamethylendiisocyanat mit dem mindestens einen Polyisocyanat auf Basis eines cycloaliphatischen Diisocyanats und/oder mindestens einen Polyisocyanat auf Basis von Pentamethylendiisocyanat und wenigstens einem cycloaliphatischen Diisocyanat vermischt wird und vorher, gleichzeitig und/oder nachher ein oder mehrere Hilfs- und Zusatzstoffe zugegeben werden können.

8. Verwendung einer Polyisocyanatzusammensetzung gemäß einem der Ansprüche 1 bis 6 als Vernetzungsmittel in einer Beschichtungszusammensetzung.

9. Verwendung von Pentamethylendiisocyanat in einer Polyisocyanatzusammensetzung gemäß einem der Ansprüche 1 bis 6 zur Erhöhung der Chemikalienbeständigkeit der erhaltenen Beschichtung.

10. Zwei-Komponenten-System enthaltend eine Komponente A) umfassend mindestens eine Polyisocyanatzusammensetzung gemäß einem der Ansprüche 1 bis 6 und eine Komponente B), umfassend wenigstens ein gegenüber Isocyanatgruppen reaktives Bindemittel, wobei die Komponente A) und/oder die Komponente B) wenigstens ein Verlaufshilfsmittel und/oder weitere Hilfs- und Zusatzstoffe enthalten kann.

11. Verfahren zur Herstellung einer Beschichtung auf einem Substrat, bei dem ein Zwei-Komponenten-System nach Anspruch 10 auf das Substrat aufgebracht und bei einer Temperatur > 25°C und < 150°C, bevorzugt > 35°C und < 140°C, besonders bevorzugt > 50°C und < 130°C ausgehärtet wird.

12. Beschichtung, hergestellt oder herstellbar nach einem Verfahren gemäß Anspruch 11.

13. Verbund aus einer Beschichtung nach Anspruch 12 und einem Substrat mit einer Oberfläche aus Metall und/oder Kunststoff.
